# EUROPEAN PATENT APPLICATION

(11) **EP 4 082 354 A1**
(43) Date of publication of application: **02.11.2022**
(21) Application number: 21170487.9
(22) Date of filing: 26.04.2021
(51) Int. Cl.: A23J 3/14, A23J 3/16, A23J 3/18, A23J 3/22, A23J 3/26, A23L 17/30

(54) **PLANT-BASED SEAFOOD PRODUCT AND METHOD FOR PREPARING A PLANT-BASED SEAFOOD PRODUCT**

(71) Applicant: Hooked Seafood AB, 131 47 Nacka (SE)
(72) Inventor: Liu, Zhihao, 42243 Gothenburg (SE)
(74) Representative: Patentanwälte Ruff, Wilhelm, Beier, Dauster & Partner mbB

(57) **Abstract**

The invention relates to a plant-based seafood product comprising or consisting of the following ingredients:
- at least one protein and/or at least one protein concentrate and/or at least one protein isolate,
- at least one fiber component,
- at least one solid lipid and/or at least one liquid lipid,
- at least one hydrocolloid component and

- water.

The invention further relates to a method for preparing a plant-based seafood product and to the use of a composition comprising or consisting of the above-mentioned ingredients as a plant-based seafood product.

## Description

### FIELD OF THE INVENTION

The present invention relates to a plant-based seafood product, to a method for preparing a plant-based seafood product to the use of a composition as plant-based seafood product.

### BACKGROUND OF THE INVENTION

Seafood consumption of people has increased rapidly the past 20 years and it is estimated to grow by 30% within the next 10 years. At the same time fish farms threaten to collapse, intoxication of oceans will continue to increase and overfishing will continue to threaten marine ecosystems to go extinct. In addition, entry of antibiotics, mercury and microplastics in seafood will increase more than ever before.

Therefore, there exists an unmet need for food-based solutions that can be realized in large scales without harming the planet.

### OBJECT AND SOLUTION

In view of the foregoing, the object underlying the present invention is therefore to make available a plant-based seafood product that properly addresses the afore-mentioned need. A further object of the present invention is to provide a method for preparing a plant-based seafood product. A further object of the invention is to provide a use of a composition as plant-based seafood product.

The above objects are accomplished by a plant-based seafood product according to independent claim 1, by a method according to claim 14 and by a use according to claim 15. Preferred embodiments of the invention are defined in the dependent claims and the present description. The subject-matter and wording, respectively, of all claims is hereby incorporated into the description by explicit reference.

According to a first aspect, the invention relates to a plant-based seafood product comprising or consisting of the following ingredients:
- at least one protein and/or at least one protein concentrate and/or at least one protein isolate,
- at least one fiber component,
- at least one solid lipid and/or at least one liquid lipid,
- at least one hydrocolloid component and
- water.

The plant-based seafood product according to the present invention is preferably a structured and/or textured plant-based seafood product.

The term "seafood" according to the present invention refers to any form of sea life, in particular animal sea life, preferably fish, and/or parts, particularly in the form of a fillet or roe, thereof.

The term "plant-based seafood product", in particular "structured and/or textured plant-based seafood product", as used according to the present invention refers to a product comprising or consisting of plant or vegetable ingredients, i.e. ingredients being of plant or vegetable origin and/or plant or vegetable ingredients of synthetic origin, but have properties, in particular structure and/or texture and/or other properties, corresponding or comparable to those of seafood. In other words, the term "plant-based seafood product", in particular "structured and/or textured plant-based seafood product", as used according to the present invention refers to a product which is not derived from seafood. Thus, the term "plant-based seafood product", particularly the term "structured and/or textured plant-based seafood product", may also be termed as "seafood analogue product", in particular "structured and/or textured seafood analogue product", according to the present invention.

The term "plant or vegetable ingredients of synthetic origin" as used according to the present invention refers to ingredients being chemically synthesized, typically in a laboratory, microbially synthesized, i.e. synthesized by microorganisms, or recombinantly synthesized, i.e. by means of biotechnology and/or gene engineering.

The term "texture" as used according to the present invention refers to the physical sensations in the mouth caused by food or drink, as distinct from taste. It is a fundamental sensory attribute which, along with taste and smell, determines the overall flavor of a food item. The term "texture" as used according to the present invention may also be termed as "mouthfeel".

The term "solid lipid" as used according to the present invention refers to a lipid being in solid form at room temperature, i.e. at a temperature of 18 °C to 30 °C, in particular 20 °C to 25 °C, and under atmospheric pressure, i.e. under the pressure within the atmosphere of Earth, in particular under a pressure of 101,325 Pa (standard atmosphere).

The term "liquid lipid" as used according to the present invention refers to a lipid being in liquid form at room temperature, i.e. at a temperature of 18 °C to 30 °C, in particular 20 °C to 25 °C, and under atmospheric pressure, i.e. under the pressure within the atmosphere of Earth, in particular under a pressure of 101,325 Pa (standard atmosphere).

The term "hydrocolloid component" as used according to the present invention refers to a dietary polysaccharide, in particular derived from plants and/or sea algaes, that forms a hydrocolloid together with water. Preferably, the hydrocolloid has a dispersed phase (dispersed hydrocolloid component particles and dietary polysaccharide particles, respectively) and a continuous phase (water). The dispersed hydrocolloid component particles and dietary polysaccharide particles, respectively may have a diameter, in particular an average diameter, of 1 nm to 1 µm. Advantageously, the hydrocolloid component may exhibit gel forming properties and/or thickening properties and/or stabilizing properties in the presence of water. More preferably, the hydrocolloid component as used according to the present invention is a water-soluble dietary polysaccharide, in particular being capable of increasing viscosity and/or pseudoplasticity of water or an aqueous media, in particular aqueous solution.

Preferably, apart from the water, all ingredients of the plant-based seafood product are of plant origin, i.e. are vegetable or herbal ingredients.

Advantageously, the at least one fiber component enhances the texture of the plant-based seafood product. The at least one fiber component plays a vital role in forming a continuous fibrous structure together with the at least one protein and/or at least one protein concentrate and/or at least one protein isolate.

Advantageously, the at least one solid lipid also functions as a texture builder by crystallization and soothes dry mouthfeel.

Preferably, both, the at least one solid lipid and the at least one liquid lipid function as an oily ingredient of the plant-based seafood product.

In an embodiment of the invention, the at least one protein is selected from the group consisting of soy protein, pea protein, wheat protein, fava bean protein and mixtures of at least two of the afore-said proteins.

The term "soy protein" as used according to the present invention refers to a protein being present or occurring in soy.

Preferably, the soy protein represents a basic ingredient of the plant-based seafood product.

Further, soy protein has the advantage of good machinability. In addition, it functions well in forming good protein fibers and gives a relatively white color in the plant-based seafood product or an end-product made of the plant-based seafood product.

The term "pea protein" as used according to the present invention refers to a protein being present or occurring in pea.

The term "wheat protein" as used according to the present invention refers to a protein being present or occurring in wheat.

The term "fava bean protein" as used according to the present invention refers to a protein being present or occurring in fava bean.

The wheat protein functions well during high temperature and high moisture, i.e. under conditions typically being applied in an extruder. In addition, wheat protein advantageously softens the texture of the plant-based seafood product or an end-product made of the plant-based seafood product. Further, wheat protein also gives a white color in the plant-based seafood product or an end-product made of the plant-based seafood product.

For example, the at least one protein may be soy protein, and apart from soy protein, the plant-based seafood product may be free of any further protein.

Further, the at least one protein may be pea protein, and apart from pea protein, the plant-based seafood product may be free of any further protein.

Further, the at least one protein may be wheat protein, and apart from wheat protein, the plant-based seafood product may be free of any further protein.

Further, the at least one protein may be fava bean protein, and apart from fava bean protein, the plant-based seafood product may be free of any further protein.

Preferably, the at least one protein is a mixture or combination of soy protein and pea protein. Particularly, apart from soy protein and pea protein, the plant-based seafood product may be free of any further protein.

Alternatively, the at least one protein is preferably a mixture or combination of soy protein, pea protein and wheat protein. Particularly, apart from soy protein, pea protein and wheat protein, the plant-based seafood product may be free of any further protein.

In a further embodiment of the invention, the at least one protein concentrate is selected from the group consisting of soy protein concentrate, pea protein concentrate, wheat protein concentrate, fava bean protein concentrate and mixtures of at least two of the afore-said protein concentrates.

The term "soy protein concentrate" as used according to the present invention refers to a protein material that is obtained or obtainable from soy upon removal of soluble carbohydrate, ash, and other minor constituents. Preferably, the soy protein concentrate has a proportion of protein, in particular soy protein, of at least 65 % by weight, in particular 65 % by weight to 85 % by weight, on a dry-weight basis, i.e. based on a dry weight of the soy protein concentrate.

Soy protein concentrate has (also) the advantage of good machinability. In addition, it functions well in forming good protein fibers and gives a relatively white color in the plant-based seafood product or an end-product made of the plant-based seafood product.

The term "pea protein concentrate" as used according to the present invention refers to a protein material that is obtained or obtainable from pea upon removal of soluble carbohydrate, ash, and other minor constituents. Preferably, the pea protein concentrate has a proportion of protein, in particular pea protein, of at least 65 % by weight, in particular 65 % by weight to 85 % by weight, on a dry-weight basis, i.e. based on a dry weight of the pea protein concentrate. Further, the soy protein concentrate preferably represents a basic ingredient of the plant-based seafood product.

The term "wheat protein concentrate" as used according to the present invention refers to a protein material that is obtained or obtainable from wheat upon removal of soluble carbohydrate, ash, and other minor constituents. Preferably, the wheat protein concentrate has a proportion of protein, in particular wheat protein, of at least 65 % by weight, in particular 65 % by weight to 85 % by weight, on a dry-weight basis, i.e. based on a dry weight of the wheat protein concentrate.

The wheat protein concentrate (also) functions well during high temperature and high moisture, i.e. under conditions typically being applied in an extruder. In addition, wheat protein concentrate (also) advantageously softens the texture of the plant-based seafood product or an end-product made of the plant-based seafood product. Further, wheat protein concentrate (also) gives a white color in the plant-based seafood product or an end-product made of the plant-based seafood product.

The term "fava bean protein concentrate" as used according to the present invention refers to a protein material that is obtained or obtainable from fava bean upon removal of soluble carbohydrate, ash, and other minor constituents. Preferably, the fava bean protein concentrate has a proportion of protein, in particular fava bean protein, of at least 65 % by weight, in particular 65 % by weight to 85 % by weight, on a dry-weight basis, i.e. based on a dry weight of the fava bean protein concentrate.

For example, the at least one protein concentrate may be soy protein concentrate, and apart from soy protein concentrate, the plant-based seafood product may be free of any further protein concentrate.

Further, the at least one protein concentrate may be pea protein concentrate, and apart from pea protein concentrate, the plant-based seafood product may be free of any further protein concentrate.

Further, the at least one protein concentrate may be wheat protein concentrate, and apart from wheat protein concentrate, the plant-based seafood product may be free of any further protein concentrate.

Further, the at least one protein concentrate may be fava bean protein concentrate, and apart from fava bean protein concentrate, the plant-based seafood product may be free of any further protein concentrate.

Preferably, the at least one protein concentrate is a mixture or combination of soy protein concentrate and pea protein concentrate. Particularly, apart from soy protein concentrate and pea protein concentrate, the plant-based seafood product may be free of any further protein concentrate.

Alternatively, the at least one protein concentrate is preferably a mixture or combination of soy protein concentrate, pea protein concentrate and wheat protein concentrate. Particularly, apart from soy protein concentrate, pea protein concentrate and wheat protein concentrate, the plant-based seafood product may be free of any further protein concentrate.

In a further embodiment of the invention, the at least one protein isolate is selected from the group consisting of soy protein isolate, pea protein isolate, wheat protein isolate, chickpea protein isolate, and mixtures of at least two of the afore-said protein isolates.

The term "soy protein isolate" as used according to the present invention refers to a protein material that is obtained or obtainable from soy upon removal of insoluble polysaccharide, soluble carbohydrate, ash, and other minor constituents. Advantageously, the soy protein isolate has a high content of pure soy protein. Preferably, the soy protein isolate has a proportion of protein, in particular soy protein, of at least 85 % by weight, in particular 85 % by weight to 95 % by weight, on a dry-weight basis, i.e. based on a dry weight of the soy protein isolate. Further, the soy protein isolate preferably represents a basic ingredient of the plant-based seafood product.

Soy protein isolate has (also) the advantage of good machinability. In addition, it functions well in forming good protein fibers and gives a relatively white color in the plant-based seafood product or an end-product made of the plant-based seafood product.

The term "pea protein isolate" as used according to the present invention refers to a protein material that is obtained or obtainable from pea upon removal of insoluble polysaccharide, soluble carbohydrate, ash, and other minor constituents. Preferably, the pea protein isolate has a proportion of protein, in particular pea protein, of at least 85 % by weight, in particular 85 % by weight to 95 % by weight, on a dry-weight basis, i.e. based on a dry weight of the pea protein isolate.

The term "wheat protein isolate" as used according to the present invention refers to a protein material that is obtained or obtainable from wheat upon removal of insoluble polysaccharide, soluble carbohydrate, ash, and other minor constituents. Preferably, the wheat protein isolate has a proportion of protein, in particular wheat protein, of at least 85 % by weight, in particular 85 % by weight to 95 % by weight, on a dry-weight basis, i.e. based on a dry weight of the wheat protein isolate.

The wheat protein isolate (also) functions well during high temperature and high moisture, typically being conditions applied in an extruder. In addition, wheat protein isolate advantageously softens the texture of the plant-based seafood product or an end-product made thereof and gives also a white color in the plant-based seafood product or an end-product made thereof.

The term "chickpea protein isolate" as used according to the present invention refers to a protein material that is obtained or obtainable from chickpea protein isolate upon removal of insoluble polysaccharide, soluble carbohydrate, ash, and other minor constituents. Preferably, the chickpea protein isolate has a proportion of protein, in particular chickpea protein, of at least 85 % by weight, in particular 85 % by weight to 95 % by weight, on a dry-weight basis, i.e. based on a dry weight of the chickpea protein isolate.

For example, the at least one protein isolate may be soy protein isolate, and apart from soy protein isolate, the plant-based seafood product may be free of any further protein isolate.

Further, the at least one protein isolate may be pea protein isolate, and apart from pea protein isolate, the plant-based seafood product may be free of any further protein isolate.

Further, the at least one protein isolate may be wheat protein isolate, and apart from wheat protein isolate, the plant-based seafood product may be free of any further protein isolate.

Further, the at least one protein isolate may be chickpea protein isolate, and apart from chickpea protein isolate, the plant-based seafood product may be free of any further protein isolate.

Preferably, the at least one protein isolate is a mixture or combination of soy protein isolate and pea protein isolate. Particularly, apart from soy protein isolate and pea protein isolate, the plant-based seafood product may be free of any further protein isolate.

Alternatively, the at least one protein isolate is preferably a mixture or combination of soy protein isolate, pea protein isolate and wheat protein isolate. Particularly, apart from soy protein isolate, pea protein isolate and wheat protein isolate, the plant-based seafood product may be free of any further protein isolate.

In a further embodiment of the invention, the at least one protein has a proportion of 5 % by weight to 30 % by weight, in particular 10 % by weight to 25 % by weight, preferably 12 % by weight to 24 % by weight, based on the total weight of the plant-based seafood product.

In a further embodiment of the invention, the at least one protein concentrate has a proportion of 1 % by weight to 10 % by weight, in particular 1 % by weight to 8 % by weight, preferably 1 % by weight to 5 % by weight, based on the total weight of the plant-based seafood product.

In a further embodiment of the invention, the at least one protein isolate has a proportion of 4 % by weight to 30 % by weight, in particular 8 % by weight to 25 % by weight, preferably 10 % by weight to 24 % by weight, based on the total weight of the plant-based seafood product.

In a further embodiment of the invention, the at least one fiber component is a dietary fiber and/or a component, in particular water-soluble fiber and/or water-insoluble fiber, preferably water-soluble fiber, of a dietary fiber.

The term "dietary fiber" as used according to the present invention refers to edible parts of plants or analogous carbohydrates that are resistant to digestion and absorption in the human small intestine, with complete or partial fermentation in the large intestine. Typically, the dietary fiber has two main components, namely a water-soluble fiber, i.e. a fiber, which dissolves in water, and a water-insoluble fiber, i.e. a fiber, which does not dissolve in water. The soluble fiber is generally fermented in the colon into gases and physiologically active by-products, such as short-chain fatty acids produced in the colon by gut bacteria. The Insoluble fiber is inert to digestive enzymes in the upper gastrointestinal tract.

Preferably, the dietary fiber comprises or consists of a plant ingredient, in particular a non-starch polysaccharide and/or another plant ingredient, preferably selected from the group consisting of cellulose, resistant starch, resistant dextrins, inulin, lignins, chitins (in fungi), pectins, β-glucans, oligosaccharides, plant ingredients occurring in citrus and mixtures of at least two of the afore-said plant ingredients.

In other words, the at least one fiber component, in particular dietary fiber, is preferably selected from the group consisting of pea fiber, cellulose fiber, resistant starch fiber, resistant dextrin fiber, inulin fiber, lignin fiber, chitin fiber, pectin fiber, β-glucan fiber, oligosaccharide fiber, citrus fiber and mixtures of at least two of the afore-said fiber components, in particular dietary fibers.

Preferably, the water-soluble fiber of a dietary fiber comprises or consists of at least one nutrient selected from the group consisting of arabinoxylan, fructans, inulin, pectin, alginic acids, sodium alginate, potassium alginate, ammonium alginate, calcium alginate, propylene glycol alginate, agar, carrageen, raffinose, polydextrose and mixtures of at least two of the afore-said nutrients.

The arabinoxylan may be derived or obtained from psyllium. The inulin may be derived or obtained from diverse plants, e.g. topinambour or chicory. The pectin may be derived or obtained from fruit skin, particularly of apples or quinces, or from vegetables. The alginic acids may be derived or obtained from algae. The carrageen may be derived or obtained from red algae. The raffinose may be derived or obtained from legumes. The polydextrose may be derived or obtained from synthetic polymer.

Preferably, the insoluble fiber of a dietary fiber comprises or consists of at least one nutrient selected from the group consisting of cellulose, chitin, hemicellulose, hexoses, pentose, lignin, xanthan gum, resistant starch and mixtures of at least two of the afore-said nutrients.

The cellulose may be derived or obtained from cereals, fruits or vegetables. The chitin may be derived or obtained from fungi, exoskeleton of insects or crustaceans. The hemicellulose may be derived or obtained from cereals, bran, timber or legumes. The hexoses may be derived or obtained from wheat or barley. The pentose may be derived or obtained from rye or oat. The lignin may be derived or obtained from stones of fruits, vegetables or cereals. The xanthan gum may be produced with Xanthomonas-bacteria from sugar substrates. The resistant starch may be starch protected by seed or shell (type RS1), granular starch (type RS2) or retrograded starch (type RS3). Further, the resistant starch may be derived or obtained from high amylose corn, barley, high amylose wheat, legumes, raw bananas, cooked and cooled pasta or cooked and cooled potatoes.

Preferably, the at least one fiber component, in particular dietary fiber or water-soluble fiber of a dietary fiber, is pea fiber.

The term "pea fiber" as used according to the present invention preferably refers to a soluble dietary fiber extracted from the endosperm of the Pisum Sativum pea that contains both dietary fiber and starch. The dietary fiber may comprise or consist of at least one nutrient as disclosed in the previous description.

Advantageously, the pea fiber especially enhances the texture of the plant-based seafood product. Further, the pea fiber turned out to be especially useful for forming a continuous fibrous structure together with soy and/or soy concentrate and/or soy isolate. It gives a softer mouthfeel and provides pure white color in the plant-based seafood product or in an end-product made of the plant-based seafood product.

In a further embodiment of the invention, the at least one fiber component has a proportion of 1 % by weight to 15 % by weight, in particular 5 % by weight to 12 % by weight, preferably 6 % by weight to 10 % by weight, based on the total weight of the plant-based seafood product.

In a further embodiment of the invention, the at least one solid lipid is selected from the group consisting of coco oil, shea oil, coco & shea oil, hydrogenated rapeseed oil and mixtures of at least two of the afore-said solid lipids.

In a further embodiment of the invention, the at least one solid lipid has a proportion of 2 % by weight to 8 % by weight, in particular 2 % by weight to 6 % by weight, preferably 2.5 % by weight to 5 % by weight, based on the total weight of the plant-based seafood product.

In a further embodiment of the invention, the at least one liquid lipid is selected from the group consisting of sunflower oil, rapeseed oil and mixtures of the two afore-said liquid lipids.

In a further embodiment of the invention, the at least one liquid lipid has a proportion of 2 % by weight to 8 % by weight, in particular 2 % by weight to 6 % by weight, preferably 2.5 % by weight to 5 % by weight, based on the total weight of the plant-based seafood product.

In a further embodiment of the invention, the at least one hydrocolloid component is selected from the group consisting of carrageenan gels, cellulose gum, guar gum and mixtures of at least two of the afore-said hydrocolloid components.

Further, the at least one hydrocolloid component may have a proportion of 0.05 % by weight to 2 % by weight, in particular 0.05 % by weight to 1 % by weight, preferably 0.05 % by weight to 0.8 % by weight, based on the total weight of the plant-based seafood product.

In a further embodiment of the invention, the water has a proportion of 40 % by weight to 80 % by weight, in particular 50 % by weight to 75 % by weight, preferably 55 % by weight to 75 % by weight, based on the total weight of the plant-based seafood product.

In a further embodiment of the invention, the plant-based seafood product is a plant-based fish product, in particular a plant-based salmon product, preferably in the form of a fillet or in the form of shredded chunks and/or pieces.

According to a second aspect, the present invention relates to a method for preparing a plant-based seafood product, in particular a plant-based seafood product according to the first aspect of the invention. The method comprises the steps of
a) providing a mixture comprising or consisting of
   - at least one protein and/or at least one protein concentrate and/or at least one protein isolate,
   - at least one fiber component,
   - at least one solid lipid and/or at least one liquid lipid,
   - at least one hydrocolloid component and
   - water
      and
b) shaping, preferably extruding, the mixture to obtain the plant-based seafood product.

Step a) may be carried out by using the at least one protein and the at least one fiber component in a mass ratio of 70 : 30, in particular 65 : 35, preferably 64 : 36.

In particular, step a) may be carried out by using a mixture or combination of soy protein and pea protein as the at least one protein and pea fiber as the at least one fiber component. Preferably, the soy protein, pea protein and pea fiber may be used in a mass ratio of 50 : 20 : 30, in particular 45 : 20 : 35, preferably 44 : 20 : 36.

Further, step a) may be carried out by usng a mixture or combination of soy protein, pea protein and wheat protein as the at least one protein and pea fiber as the at least one fiber component. Preferably, the soy protein, pea protein, wheat protein and pea fiber may be used in a mass ratio of 50 : 10 : 10 : 30., in particular 45 : 10 : 10 : 35, preferably 44 : 10 : 10 : 35.

Further, step a) may be carried out by additionally using at least one hydrocolloid component. Alternatively or in combination, at least one hydrocolloid component may be added to the mixture before step b), in particular between step a) and step b).

Further, step a) may be carried out for 0.5 h to 12 h, in particular 0.5 h to 6 h, preferably 0.5 h to 2 h.

Further, step a) may be carried out at room temperature, i.e. at a temperature of 18 °C to 30 °C, in particular 20 °C to 25 °C.

Preferably, step b), is carried out by using an extruder, in particular screw extruder, preferably twin screw extruder. The extruder may be operated with an average screw speed of 500 rpm to 3000 rpm, in particular 500 rpm to 2500 rpm, preferably 500 rpm to 2000 rpm.

Further, step b) may be carried out by operating a barrel of the extruder at a temperature of 100 °C to 150 °C, in particular 110 °C to 135 °C.

Further, step b) may be carried out by operating a die of the extruder at a temperature of 15 °C to 30 °C, in particular 20 °C to 28 °C, preferably 20 °C to 25 °C.

Further, step b) may be carried out under a pressure, in particular overpressure, preferably applied to the barrel of the extruder, of 2 bar to 20 bar, in particular 5 bar to 20 bar, preferably 5 bar to 15 bar.

With respect to further features and advantages of the method, reference is made in its entirety to the features and advantages described in terms of the plant-based seafood product according to the first aspect of the invention. The features and advantages described under the first aspect of the invention do apply, mutatis mutandis, with respect to the method according to the second aspect of the invention.

According to a third aspect, the invention relates to the use of a composition comprising or consisting of the following ingredients:
- at least one protein and/or at least one protein concentrate and/or at least one protein isolate,
- at least one fiber component,
- at least one solid lipid and/or at least one liquid lipid,
- at least one hydrocolloid component and
- water
as a plant-based seafood product, in particular plant-based fish product, preferably plant-based salmon product, in particular in the form of a fillet or in the form of shredded chunks and/or pieces.

With respect to further features and advantages of the use according to the third aspect of the invention, reference is also made in its entirety to the features and advantages described in terms of the plant-based seafood product according to the first aspect of the invention. The features and advantages described under the first aspect of the invention do apply, mutatis mutandis, with respect to the use according to the third aspect of the invention.

Further features and advantages of the invention will become clear from the following description of preferred embodiments in form of examples in conjunction with the subject-matter of the dependent claims. The individual features can be realized either singularly or severally in combination in one embodiment of the invention. The preferred embodiments merely serve for illustration and better understanding of the invention and are not to be understood as in any way limiting the invention.

### EXAMPLE SECTION

### 1. Extrusion process

Soy protein isolate (Vegacon 90, Eurosoy, GE), wheat protein isolate (Nutralys W, Roquette, FR), pea fiber (Swelite, Cosucra, BE), pea protein isolate (PPI, Cosucra, BE), solid coco & shea oil (XP6635, AAK, SE) were used as ingredients. All these ingredients were mixed with a certain amount of water and hydrated over night for 12 h before the extrusion was performed. The extrusion was performed using a twin screw 20 mm extruder (Brabender 20/40, Brabender, Germany).

### 2. Example 1

Soy protein isolate, pea protein isolate, wheat protein isolate and pea fiber were mixed in a mass ratio of 55 : 5 : 10 : 30. Then, coco & shea oil and water at a mass percentage of the final mixture of 5% and 52.5% were well blended together with the dry mixture and fed in a Brabender 20/40 twin screw extruder at a screw speed of 115 rpm/min. The producing temperature was averagely 147.5 °C in the barrel, the die temperature was 24 °C and the barrel pressure was 13 bar. The shredded product had good fibrous structure.

### 3. Example 2

Soy protein isolate, pea protein isolate, and pea fiber were mixed in a mass ratio of 30 : 30 : 40. Then, coco & shea oil, sunflower oil and water at a mass percentage of the final mixture of 3.75%, 3.75% and 5.2% were well blended together with the dry mixture and fed in a Brabender 20/40 twin screw extruder at a screw speed of 120 rpm/min. The producing temperature was averagely 150 °C in the barrel, the die temperature was 25 °C and the barrel pressure was 8 bar. The shredded product had also a good fibrous structure.

## Claims

1. Plant-based seafood product comprising or consisting of the following ingredients:
- at least one protein and/or at least one protein concentrate and/or at least one protein isolate,
- at least one fiber component,
- at least one solid lipid and/or at least one liquid lipid,
- at least one hydrocolloid component and
- water.

2. The plant-based seafood product according to claim 1, **characterized in that** the at least one protein is selected from the group consisting of soy protein, pea protein, wheat protein, fava bean protein and mixtures of at least two of the afore-said proteins.

3. The plant-based seafood product according to claim 1 or 2, **characterized in that** the at least one protein has a proportion of 5 % by weight to 30 % by weight, in particular 10 % by weight to 25 % by weight, preferably 12 % by weight to 24 % by weight, based on the total weight of the plant-based seafood product, and/or the at least one protein concentrate has a proportion of 1 % by weight to 10 % by weight, in particular 1 % by weight to 8 % by weight, preferably 1 % by weight to 5 % by weight, based on the total weight of the plant-based seafood product, and/or the at least one protein isolate has a proportion of 4 % by weight to 30 % by weight, in particular 8 % by weight to 25 % by weight, preferably 10 % by weight to 24 % by weight, based on the total weight of the plant-based seafood product.

4. The plant-based seafood product according to any of the preceding claims, **characterized in that** the at least one fiber component is a dietary fiber and/or a component, in particular a water-soluble fiber and/or a water-insoluble fiber, of a dietary fiber.

5. The plant-based seafood product according to any of the preceding claims, **characterized in that** the at least one fiber component is selected from the group consisting of pea fiber, cellulose fiber, resistant starch fiber, resistant dextrin fiber, inulin fiber, lignin fiber, chitin fiber, pectin fiber, β-glucan fiber, oligosaccharide fiber, citrus fiber and mixtures of at least two of the afore-said fiber components.

6. The plant-based seafood product according to any of the preceding claims, **characterized in that** the at least one fiber component has a proportion of 1 % by weight to 15 % by weight, in particular 5 % by weight to 12 % by weight, preferably 6 % by weight to 10 % by weight, based on the total weight of the plant-based seafood product.

7. The plant-based seafood product according to any of the preceding claims, **characterized in that** the at least one solid lipid is selected from the group consisting of coco oil, shea oil, coco & shea oil, hydrogenated rapeseed oil and mixtures of at least two of the afore-said solid lipids.

8. The plant-based seafood product according to any of the preceding claims, **characterized in that** the at least one liquid lipid is selected from the group consisting of sunflower oil, rapeseed oil and mixtures of the two afore-said liquid lipids.

9. The plant-based seafood product according to any of the preceding claims, **characterized in that** the at least one solid lipid has a proportion of 2 % by weight to 8 % by weight, in particular 2 % by weight to 6 % by weight, preferably 2.5 % by weight to 5 % by weight, based on the total weight of the plant-based seafood product, and/or the at least one liquid lipid has a proportion of 2 % by weight to 8 % by weight, in particular 2 % by weight to 6 % by weight, preferably 2.5 % by weight to 5 % by weight, based on the total weight of the plant-based seafood product.

10. The plant-based seafood product according to any of the preceding claims, **characterized in that** the water has a proportion of 40 % by weight to 70 % by weight, in particular 50 % by weight to 65 % by weight, preferably 50 % by weight to 60 % by weight, based on the total weight of the plant-based seafood product.

11. The plant-based seafood product according to any of the preceding claims, **characterized in that** the at least one hydrocolloid component is selected from the group consisting of carrageenan gels, cellulose gum, guar gum and mixtures of at least two of the afore-said hydrocolloid components.

12. The plant-based seafood product according to any of the preceding claims, **characterized in that** the at least one hydrocolloid component has a proportion of 0.1 % by weight to 5 % by weight, in particular 0.3 % by weight to 3 % by weight, preferably 0.5 % by weight to 2 % by weight, based on the total weight of the plant-based seafood product.

13. The plant-based seafood product according to any of the preceding claims, **characterized in that** the plant-based seafood product is a plant-based fish product, in particular a plant-based salmon product, preferably in the form of a fillet or in the form of shredded chunks and/or pieces.

14. Method for preparing a plant-based seafood product according to any of the preceding claims comprising the steps of
a) providing a mixture comprising or consisting of
- at least one protein and/or at least one protein concentrate and/or at least one protein isolate,
- at least one fiber component,
- at least one solid lipid and/or at least one liquid lipid
- at least one hydrocolloid component and
- water
and
b) shaping, preferably extruding, the mixture to obtain the plant-based seafood product.

15. Use of a composition comprising or consisting of the following ingredients:
- at least one protein and/or at least one protein concentrate and/or at least one protein isolate,
- at least one fiber component,
- at least one solid lipid and/or at least one liquid lipid,
- at least one hydrocolloid component, and
- water
as a plant-based seafood product, in particular plant-based fish product, preferably plant-based salmon product, more preferably in the form of a fillet or in the form of shredded chunks and/or pieces.
